# EUROPÄISCHE PATENTSCHRIFT

(11) **EP 2 587 089 B1**
(45) Veröffentlichungstag und Bekanntmachung des Hinweises auf die Patenterteilung: **11.12.2013**
(21) Anmeldenummer: 11008634.5
(22) Anmeldetag: 27.10.2011
(51) Int. Cl.: F16F 9/16

(54) **Dämpfer für eine Drehbewegung von Toilettendeckeln und -brillen**
Damper for a rotation movement on toilet lids and seats
Evaporateur pour un mouvement rotatif de couvercles et lunettes de toilettes

(43) Veröffentlichungstag der Anmeldung: 01.05.2013
(73) Patentinhaber: Geberit International AG, 8645 Jona (CH)
(72) Erfinder: Stadler, Valentin, 8733 Eschenbach (DE); Bissig, Georg, 8852 Altendorf (DE)
(74) Vertreter: Szynka, Dirk

(56) Entgegenhaltungen:
- EP-A1- 2 230 417
- WO-A1-2008/081702
- WO-A1-2010/070624

## Beschreibung

Die vorliegende Erfindung bezieht sich auf das Dämpfen der Drehbewegung von Toilettendeckeln und Toilettenbrillen.

Viele Toiletten weisen auf einem schüsselartigen Klosettkörper einen Toilettendeckel und/oder eine -brille auf. Dies gilt für klassische Wasserklosetts genauso wie für Modelle ohne Wasserspülung, insbesondere mit Kompostierung, und für Urinale wie für gewöhnliche Sitztoiletten. In machen Fällen, zum Beispiel bei Urinalen, sind nur Toilettendeckel vorgesehen, andererseits können bei bestimmten Sitztoiletten auch nur Toilettenbrillen vorgesehen sein. In den meisten Fällen sind sowohl Deckel als auch Brillen vorhanden.

Bei der Benutzung wird zumindest der Toilettendeckel hochgeklappt und nach der Benutzung wieder heruntergeklappt. Für die Toilettenbrille gilt das teils bei der Benutzung, jedenfalls aber bei der Reinigung der Toilette ebenfalls.

Es ist bekannt, die mit diesen Klappvorgängen verbundenen Drehbewegungen mechanisch zu dämpfen, um ein heftiges Aufschlagen des heruntergeklappten Toilettendeckels oder der Toilettenbrille auf dem Klosettkörper zu verhindern oder jedenfalls zu mäßigen.

Zum Stand der Technik wird zunächst auf die EP 1 331 417 B1 verwiesen, die von diesem Grundzusammenhang abgesehen auch sonst für die im Folgenden erläuterte Erfindung von besonderer Bedeutung ist.

Ferner wird verwiesen auf die WO 2008/081702 A1, die dem Oberbegriff des Anspruchs 1 zugrundeliegt und Dämpfer für mobile elektronische Geräte, insbesondere für Mobiltelefone zeigt, allerdings schließlich auch eine Anwendungsmöglichkeit bei Toilettendeckeln und -sitzen erwähnt.

Darüber hinaus werden zum Stand der Technik noch genannt die WO 20101070624 A1 und die EP 2 230 417 A1.

Von diesem Stand der Technik und insbesondere dem zuerst genannten WO-Dokument ausgehend liegt der Erfindung das technische Problem zugrunde, einen entsprechenden Dämpfer mit verbesserten Eigenschaften anzugeben.

Hierzu richtet sich die Erfindung auf einen Dämpfer mit einem ersten Dämpferelement, das eine sich um eine Achse der Drehbewegung windende und dabei helixartig steigende erste Nockenfläche aufweist, und einem zweiten Dämpferelement, das relativ zu dem ersten Dämpferelement um die Achse drehbar ist und dazu ausgelegt ist, während der Drehbewegung auf der ersten Nockenfläche verschoben zu werden, wobei dadurch eine der helixartigen Steigung entsprechende relative axiale Verschiebung zwischen den beiden Dämpferelementen zu erzeugen ist, die ihrerseits durch ein viskoses Dämpfungsmedium gedämpft ist und so mittelbar zu einer Dämpfung der Drehbewegung führt, wobei die erste Nockenfläche in eine zweite, sich um die Achse der Drehbewegung windende und dabei helixartig steigende Nockenfläche übergeht, welche zweite Nockenfläche jedoch eine Steigung mit entgegengesetztem Sinn zu der Steigung der ersten Nockenfläche aufweist, dadurch gekennzeichnet, dass der Dämpfer für eine Drehbewegung von Toilettendeckeln oder - brillen ausgelegt und hinsichtlich der Dämpfung der axialen Verschiebung zwischen den beiden Dämpferelementen unidirektional ist, so dass bei einer Verschiebebewegung des zweiten Dämpferelements mit einem bestimmten Drehsinn auf und entlang einer der beiden Nockenflächen die dadurch erzeugte axiale Verschiebung der beiden Dämpferelemente gedämpft ist und bei einer Verschiebebewegung des zweiten Dämpferelements mit diesem Drehsinn auf und entlang der anderen der beiden Nockenflächen eine ungedämpfte axiale Verschiebung der beiden Dämpferelemente erzeugt wird und beim umgekehrten Drehsinn umgekehrt, so dass also bei dem bestimmten Drehsinn die eine der beiden Nockenflächen eine Bedeutung für die Dämpfung hat und die andere der beiden Nockenflächen beim umgekehrten Drehsinn, und zusätzlich auf einen entsprechenden Aufbausatz mit Toilettendeckel und/oder -brille und eine entsprechende Toilette.

Die Grundidee der Erfindung geht davon aus, dass die in der bereits erwähnten EP 1 331 417 B1 beschriebenen Ausführungsformen eines einschlägigen Dämpfers günstige, leistungsfähige und kompakte Lösungen sind. Allerdings sind diese Lösungen darauf festgelegt, die Drehbewegung in einem bestimmten Drehsinn zu dämpfen und im umgekehrten Drehsinn grundsätzlich weitgehend freizugeben. Alternativ könnte man mit diesen Dämpfern auch drehsinnunabhängig dämpfen, dann aber mit einem vorgegebenen Zusammenhang zwischen den Dämpfungsgraden (in bestimmten Winkelpositionen) in den beiden Drehrichtungen.

Aus Sicht der Erfinder liegt dies daran, dass bei diesen Lösungen helixartig geformte Nockenflächen Verwendung finden, die einen bestimmten (aber nur diesen) Drehsinn der Helixform aufweisen. Wenn eine Dämpfung auch im zweiten Drehbewegungssinn des Toilettendeckels oder der Toilettenbrille gewünscht ist, muss die mechanische Dämpfung der axialen Verschiebung zwischen zwei Dämpferelementen (dort zwischen "Rotor" und "Kolben") in beiden axialen Bewegungsrichtungen wirken, also zum Beispiel in beiden Strömungsrichtungen des viskosen Dämpfungsmediums in der EP 1 331 417 B1 eine wirksame Strömungsquerschnittverengung vorgesehen sein (und nicht etwa eine Freischaltung durch ein entsprechendes Einwegeventil).

Die Erfinder haben aber erkannt, dass sich demgegenüber wesentliche Verbesserungen der Gebrauchseigenschaften erzielen lassen, nämlich insbesondere ein Auf einanderfolgen eines ungedämpften Drehbewegungsanteils und eines gedämpften Drehbewegungsanteils (oder umgekehrt) in derselben Drehbewegungsrichtung und dies auch für die entgegengesetzte Drehbewegungsrichtung, aber ohne Positionsentsprechung zwischen den gedämpften Bewegungsabschnitten der beiden Bewegungsrichtungen.

Zum Beispiel ist es nach den Erkenntnissen der Erfinder vorteilhaft und erstrebenswert, wenn sich ein Toilettendeckel zunächst weitgehend widerstandslos aus seiner geschlossenen Position anheben lässt und dann erst relativ kurz vor einer ganz geöffneten oder an eine Wand angelehnten Position eine Dämpfung eintritt. Mit dieser Dämpfung während der Öffnungsbewegung kann ein hartes Anschlagen an einer Wegbegrenzung in den Gelenken oder Dämpfern und erst recht an einer Wand vermieden werden. Dies vermeidet unangenehme Geräusche, aber auch mechanische Schäden durch zu hartes Anschlagen. Umgekehrt kann beim Schließen desselben Toilettendeckels entlang dem bei der Öffnungsbewegung gedämpften Bewegungsabschnitt eine freie Bewegung erfolgen und erst dann, wenn sich der Toilettendeckel deutlich senkt, eine Dämpfung vor dem Erreichen der geschlossenen Position einsetzen. Letztere Dämpfung ist nicht notwendigerweise mit einer Dämpfung entlang dem Öffnen des Deckels im selben Bewegungsabschnitt verbunden. Damit können beide Anschlagssituationen gedämpft werden, ohne dass die Deckelbewegung in der jeweils umgekehrten Richtung zwingend behindert wird.

Erreichen lässt sich dies erfindungsgemäß dadurch, dass die aus dem Stand der Technik vorbekannte erste Nockenfläche mit einem bestimmten Helixsinn direkt oder indirekt übergeht in eine zweite daran anschließende Nockenfläche mit umgekehrtem Helixsinn. Dadurch werden entlang einer Drehbewegung mit gleichbleibendem Drehsinn richtungsverschiedene axiale Verschiebungen der beiden Dämpferelemente erzeugt, wovon eine Verschiebung gedämpft und die andere ungedämpft ist. Dabei können übrigens (helix-)steigungsfreie Zwischenabschnitte zwischen den beiden Nockenflächen vorgesehen sein, um den Übergang weniger abrupt zu gestalten.

Die eine Steigung hat also bei einem bestimmten Drehsinn eine Bedeutung für die Dämpfung, die andere Steigung beim umgekehrten Drehsinn. Zusätzlich lassen sich natürlich die Steigungen bei Bedarf individuell anpassen, um einen gewünschten Verlauf der Dämpfung über die Bewegung zu erreichen. In anderen Worten lässt sich die Wegabhängigkeit des Dämpfungsgrades durch die Helixsteigungen nach Wunsch einstellen, indem diese Helixsteigungen bedarfsweise auch von einer einfachen Schraubenlinienform mit konstanter Steigung abweichen (weswegen in den Ansprüchen von "helixartig" die Rede ist). Zum Beispiel kann so das bei der Schließbewegung geometriebedingt zunehmend in Erscheinung tretende Eigengewicht des Toilettendeckels durch zunehmende Dämpfung berücksichtigt werden; gleiches gilt für die mit zunehmender Annäherung an die Endposition möglicherweise gewünschte stärkere Dämpfung. Eine andere Möglichkeit hierfür ist ein positionsabhängiger Verlauf des axialen Dämpfungsgrades der axialen Dämpfung und wird später näher erläutert.

Im Übrigen ist es im Rahmen der Erfindung auch möglich, nicht nur eine erste Nockenfläche mit einem bestimmten Helixsinn und eine zweite Nockenfläche mit dem entgegengesetzten Helixsinn (und möglicherweise einem steigungsfreien Abschnitt dazwischen oder auch in den Endbereichen) vorzusehen, sondern im Rahmen einer Drehbewegung auch weitere Nockenflächen folgen zu lassen. Das kann dann anwendungsabhängig entschieden werden, wobei bei Toilettendeckeln und -brillen schon durch zwei Nockenflächen ganz erhebliche Gebrauchsverbesserungen zu erreichen sind.

Im Übrigen sind bei einer bevorzugten Ausgestaltung der Erfindung eine dritte und eine vierte Nockenfläche vorgesehen, jedoch in einem anderen Sinn. Bislang wurde von der Verschiebung eines der beiden Dämpferelemente auf und entlang einer Nockenfläche des anderen Dämpferelements gesprochen. Beispielsweise kann dazu ein Vorsprung auf einer solchen Nockenfläche entlang gleiten. In einem Drehsinn schiebt dabei die Nockenfläche den Vorsprung vor sich her, im anderen Drehsinn muss der Vorsprung der Nockenfläche, die ihm zunehmend Raum lässt, folgen. Dies kann zum Beispiel durch eine Schraubenfeder gewährleistet werden. Der bereits zitierte Stand der Technik erläutert zu Recht, dass bei schnellen Drehbewegungen, etwa einem unbeabsichtigten Loslassen eines Toilettendeckels, dieser Federandruck möglicherweise nicht mehr reicht, weil auch die Folgebewegung durch Restwiderstände in der Strömung eines viskosen Dämpfungsmittels etwas gebremst wird oder sogar absichtlich gedämpft ist. Dementsprechend sieht der zitierte Stand der Technik vor, auch in dieser Richtung eine Zwangsführung des zweiten Dämpferelements vorzusehen, indem nämlich dieses Dämpferelement von einer weiteren Nockenfläche angeschoben wird. Das Dämpferelement wird also zwischen zwei komplementären Nockenflächen hin und her geschoben und hat dabei nur geringes Spiel. Auf die vorliegende Erfindung übertragen bedeutet das, dass zu der erfindungsgemäßen zusätzlichen zweiten Nockenfläche dann, dem Vorschlag des Standes der Technik entsprechend, eine dritte (zu der ersten komplementäre) und eine vierte (zu der erfindungsgemäßen zweiten komplementäre) Nockenfläche hinzukommt. Zur Veranschaulichung wird auf das Ausführungsbeispiel verwiesen.

Wie bereits erwähnt bezieht sich die Erfindung auf (in einer bestimmten Drehposition) unidirektional arbeitende Dämpfer. Hier bezieht sich das Wort "unidirektional" natürlich auf die axialen Richtungen. Da Restdämpfungseffekte bei viskosen Dämpfungsmitteln kaum zu vermeiden sind, wird unter einer unidirektionalen Dämpfung verstanden, dass die Dämpfung in der gewollten Richtung mindestens um den Faktor 2 und in der folgenden Reihenfolge zunehmend bevorzugt 2,5; 3; 3,5; 4; 4.5: 5 größer ist als in der entgegengesetzten Richtung. Hierbei wird auf die axiale Bewegung abgestellt, werden also Effekte durch unterschiedliche Helixsteigungen außer Betracht gelassen.

Bislang wurde von Toilettendeckeln und Toilettenbrillen als sich nicht ausschließenden Alternativen gesprochen. Bei bevorzugten Ausführungsformen ist der erfindungsgemäße Dämpfer mindestens doppelt vorhanden, und zwar einmal für den Toilettendeckel und ein weiteres Mal für die Tollettenbrille. Besonders bevorzugt sind Ausführungsformen, bei denen im Bereich zum Beispiel eines linken Drehgelenks, das für Toilettenbrille und Toilettendeckel kombiniert ausgestaltet ist, ein Dämpfer für die Toilettenbrille vorgesehen ist, und in dem anderen, in diesem Beispiel rechten Drehgelenk dann ein Dämpfer für den Toilettendeckel oder eben umgekehrt. Es genügt nämlich grundsätzlich ein Dämpfer pro drehbewegtem Teil.

Wie schon erwähnt kann zwischen zwei helixartigen Steigungsabschnitten unterschiedlichen Helixsinns ein steigungsfreier Zwischenabschnitt vorgesehen sein, um den Übergang "weicher" zu gestalten, insbesondere ein sanftes Einsetzen oder Auslaufen der Dämpfung zu erreichen.

Außerdem kann das Verschieben des zweiten Dämpferelements auf den Nockenflächen in Form eines Verschiebens eines Vorsprungs auf den Nockenflächen geschehen, wobei dieser Vorsprung vorteilhafterweise nach zwei entgegengesetzten Selten angeschrägt ist, und zwar vorzugsweise an die Nockenflächen angepasst. Damit kann insbesondere erreicht werden, dass der Vorsprung bei seiner Verschiebung entlang den Nockenflächen mit einer gewissen Fläche oder, wenn nicht flächig, so doch jedenfalls nicht zu "spitz" bzw. mit zu großen Winkeidifferenzen anliegt. Dementsprechend lassen sich bei der gewünschten Übersetzung von Drehbewegungsmomenten in axiale Kräfte und umgekehrt zu große Materialbeanspruchungen vermeiden. Bei variierenden Helixstelgungen können die Schrägen dann an Mittelwerte oder an besonders kritische Bereiche angepasst werden.

Der erfindungsgemäße Dämpfer kann ein Gehäuse aufweisen, in dem zumindest Teile des ersten und des zweiten Dämpferelements verbaut sind. Entsprechend dem Stand der Technik EP 1 331 417 B1 kann dabei das erste Dämpferelement ein Rotor und das zweite Dämpferelement ein Kolben sein. Dementsprechend ist das erste Dämpferelement zwar drehbar, jedoch nicht in axialer Richtung verschiebbar und umgekehrt der Kolben zwar axial verschiebbar, jedoch nicht drehbar. Diese Aussagen beziehen sich auf das Gehäuse als Referenz. Die axiale Verschiebebewegung des Kolbens und die Drehbewegung des Rotors sind dabei durch das Verschieben des Kolbens, beispielsweise eines Vorsprungs desselben, auf den zumindest zwei Nockenflächen des Rotors gekoppelt und die axiale Kolbenbewegung ist hydrodynamisch gedämpft, nämlich über ein viskoses Dämpfungsmedium. Konkrete Ausgestaltungen dieser bevorzugten Ausführungsform finden sich im Ausführungsbeispiel dieser Beschreibung, wobei entsprechende Varianten gemäß dem zitierten Stand der Technik und unter Hinzunahme der weiteren Merkmale dieser Anmeldung denkbar sind.

Zuvor wurde bereits auf die grundsätzliche Möglichkeit abgestellt, eine Positionsabhängigkeit des Dämpfungsgrades durch den Steigungsverlauf der Nockenflächen zu beeinflussen. Eine andere ergänzende oder alternative Möglichkeit besteht darin, in dem Strömungsweg des Dämpfungsmediums eine Öffnung vorzusehen, die abhängig von der axialen Verschiebung zwischen den Dämpferelementen geöffnet bzw. verschlossen wird, sodass damit ein weniger stark gedämpfter (oder auch gar nicht gedämpfter) Strömungsweg für das Dämpfungsmedium freigegeben oder blockiert wird. Das Ausführungsbeispiel veranschaulicht das mit der In den Figuren oberen der radialen Bohrungen. Ein Vorteil kann darin bestehen, dass die Helixstelgungen konstant bleiben und damit die Kontaktflächen zwischen den Dämpferelementen besonders gut aneinander angepasste Formen haben können. Damit können Reibungsverluste und Verschleißerscheinungen minimiert werden.

Bevorzugt sind ferner einstellbare Verengungen eines hydrodynamischen Dämpfungsströmungsweges und mithin einstellbare Dämpfungen. Bei einer bevorzugten Ausgestaltung kann ein solches Einstellelement von außen betätigbar sein, beispielsweise durch Drehen eines Stiftes, der sich infolge der Drehung In einem Schraubengewindeeingriff längs verschiebt und damit die Verjüngung verstellt. Bei einer anderen bevorzugten Ausgestaltung kann ein (solches) Einstellelement während der Produktion oder Montage eingestellt werden und wird dann zur Vermeidung einer späteren Verstellung von außen versiegelt, beispielsweise durch Versiegeln eines Betätigungskopfes.

Vorzugsweise ist bei einem erfindungsgemäßen Dämpfer eine Gesamtdrehbewegung über einen Winkelbereich zwischen 100° und 140° möglich. Bevorzugtere Untergrenzen sind 105°, 110° und 115°. Bevorzugtere Obergrenzen sind 135° und 130°. Dabei ist vorzugsweise ein Endbewegungsabschnitt in einer ersten Bewegungsrichtung gedämpft, der mindestens 40° und höchstens 80° vor dem Endpunkt der Drehbewegung beträgt. Bevorzugtere Untergrenzen sind hier 45°, 50° sowie 55°: bevorzugtere Obergrenzen sind 75° und 70°. In der umgekehrten Bewegungsrichtung ist ebenfalls vorzugsweise ein Bewegungsabschnitt angrenzend an die Endposition gedämpft, jedoch kleiner, der mindestens 5° und höchstens 30° umfasst. Bevorzugtere Untergrenzen sind 8° und 10°.

Diese Winkelbereiche beinhalten die bereits angesprochene Möglichkeit einer Veränderung, insbesondere Erhöhung, der Dämpfungswirkung innerhalb eines gedämpften Winkelabschnitts. Beispielsweise könnten ganz ungefähr die erste Hälfte eines solchen gedämpften Bewegungsabschnitts bei ganz oder teilweise freier Öffnung und die zweite Hälfte bei geschlossener Öffnung erfolgen. Damit würde der Dämpfungseffekt durch das Einsetzen der axialen Bewegung des Kolbens bei Erreichen einer entsprechenden Nockenfläche sanft einsetzen und dann ganz ungefähr nach der Hälfte des Weges entlang dieser Nockenfläche durch Verschließen der beschriebenen Öffnung und dementsprechend erhöhtem Stromungswiderstand verstärkt. Beispielsweise könnte der letzte Bewegungsabschnitt vor dem Anschlagen beim Öffnung oder Schließen eines Toilettendeckels oder einer Toilettenbrille dementsprechend verstärkt gedämpft sein.

In der Praxis müssen die Bereiche nicht vollständig ausgenutzt werden. Durch entsprechende Wegbegrenzungen und entsprechenden Einbau des Dämpfers kann zum Beispiel auf Kosten des Endbewegungsabschnitts in der ersten Bewegungsrichtung oder des in der zweiten Bewegungsrichtung der Gesamtdrehbereich kleiner sein als die genannten Werte. Zum Beispiel könnte der Toilettendeckel oder die Toilettenbrille vor Erreichen der durch den Dämpfer ermöglichten Öffnungswinkel bereits anschlagen. Dies gilt beispielsweise dann, wenn durch Verwendung eines Aufputzspülkastens ein kleinerer Gesamtwinkelbereich zur Verfügung steht als bei einem Unterputzspülkasten.

Die Erfindung betrifft ferner einen entsprechend ausgestatteten Aufbausatz für eine Toilette. Darunter wird zumindest ein Toilettendeckel oder eine Toilettenbrille, vorzugsweise beides in Kombination, zusammen mit entsprechenden Drehgelenken oder Drehgelenkteilen für die Befestigung an einem Klosettkörper verstanden. Solche Aufbausätze könnten zum Beispiel zum Nachrüsten bestehender Toiletten oder als von Klosettkörpem getrennte Handelsware bei der Erstausstattung in Betracht kommen, beispielsweise mit der Möglichkeit zur Auswahl verschiedener Ausstattungsvarianten oder ästhetischer Gestaltungen. Da der erfindungsgemäße Dämpfer die Gebrauchseigenschaften des Toilettendeckels bzw. der Toilettenbrille maßgeblich betrifft, ist ein entsprechend ausgestatteter Aufbausatz durch den erfindungsgemäßen Dämpfer ebenfalls in seinen Gebrauchseigenschaften deutlich verändert. Gleiches gilt für eine mit einem erfindungsgemäßen Dämpfer bzw. einem solchen Aufbausatz ausgestattete Toilette.

Dabei ist bevorzugt, dass der Toilettendeckel und/oder die Toilettenbrille beim Schließen nur in einer Bewegungsphase unmittelbar vor der Schließposition und beim Öffnen nur in einer Bewegungsphase unmittelbar in der ganz geöffneten Position gedämpft ist, insbesondere mit den gerade beschriebenen Winkeln.

Die Erfindung wird im Folgenden anhand eines Ausführungsbeispiels näher erläutert, wobei die einzelnen Merkmale für alle Erfindungskategorlen und Erfindungsgegenstände und auch in anderen Kombinationen wesentlich sein können.
- Figur 1: zeigt eine perspektivische Ansicht einer erfindungsgemäßen Toilette mit einer vergrößerten Darstellung eines Drehgelenks zwischen einem Klosettkörper, einer Toilettenbrille und einem Toilettendeckel.
- Figur 2: zeigt in einer perspektivischen Darstellung wesentliche Teile eines erfindungsgemäßen Drehdämpfers links und eines konventionellen Drehdämpfers rechts daneben zum Vergleich.
- Figuren 3a, b und 4: zeigen Schnitte durch einen Drehdämpfer gemäß Figur 2 links einschließlich Gehäuse entlang der Drehachse und mit zueinander um 90° verdrehten Schnittebenen.
- Figur 5: zeigt eine Ansicht der Einzelteile eines Drehdämpfers gemäß Figur 2 links und gemäß den Figuren 3 und 4 in entlang der Drehachse auseinander-gezogenem Zustand.
- Figur 6: veranschaulicht unterschiedliche Bewegungsabschnitte und dementsprechend Dämpfungsfunktionen des erfindungsgemäßen Drehdämpfers bei einer Toilette gemäß Figur 1.

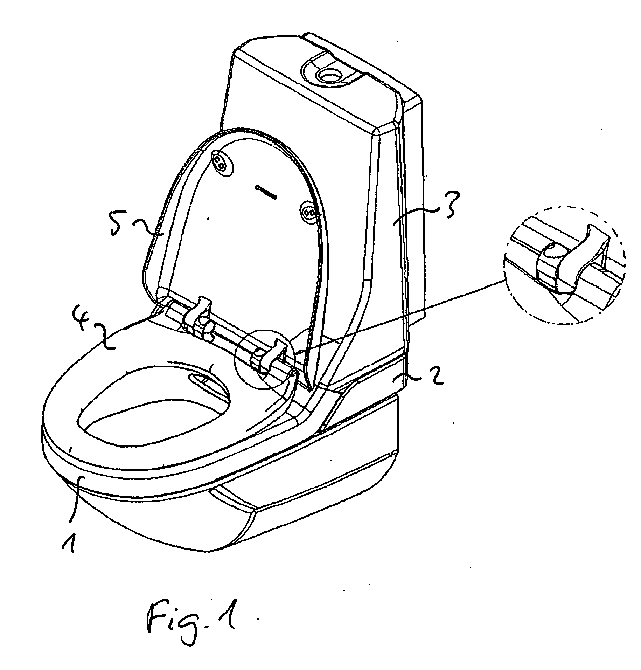

Figur 1 zeigt eine erfindungsgemäße Toilette in Form eines an sich bekannten Dusch-WCs. Die Toilette weist einen keramischen Klosettkörper 1 auf, der im Wesentlichen eine Toilettenschüssel, Spülwasser- und Abwasserzu- bzw. -ableitungen und eine Duscheinrichtung enthält. Die Duscheinrichtung befindet sich zum Teil in einem im hinteren Bereich des Klosettkörpers 1 aufgesetzten Gehäuse 2, das in eine darüber angeordnete Spülkastenverkleidung 3 eines Aufputzspülkastens übergeht. In der in Figur 1 sichtbaren Toilettenschüssel sieht man im hinteren Bereich einen nicht näher bezeichneten Durchbruch in dem Klosettkörper 1 für einen Duscharm.

Auf dem Klosettkörper 1 ist ein Aufbausatz mit einer Toilettenbrille 4 und einem Toilettendeckel 5 montiert, und zwar in an sich vorbekannter Weise. Die Montageeinrichtungen zur Befestigung des Aufbausatzes auf dem Klosettkörper 1 und entsprechende Montagestege an der Toilettenbrille 4 und an dem Toilettendeckel 5 sind gelenkig miteinander verbunden, wobei die von einem Kreis eingeschlossene Detailansicht den hier rechten der beiden im Wesentlichen spiegelbildlichen Bereiche mit dieser Verbindung zeigt. Man erkennt, dass ein Montagesteg des Toilettendeckels 5 zwischen einem Montagesteg der Toilettenbrille 4 und der Montageeinrichtung zur Befestigung auf dem Klosettkörper 1 liegt. Beide Verbindungsbereiche liegen bezüglich der insgesamt definierten gemeinsamen Drehachse der Toilettenbrille 4 und des Toilettendeckels 5 koaxial.

Der ebenfalls erfindungsgegenständliche Dämpfer ist bei dem in Figur 1 dargestellten Dusch-WC doppelt vorhanden, aber in Figur 1 selbst nicht zu sehen. Er befindet sich eingebaut in den erwähnten Montagestegen bzw. Montageeinrichtungen, und zwar in einem Fall so, dass er Bewegungen der Toilettenbrille 4 gegenüber dem Klosettkörper 1 dämpft, und im anderen Fall so, dass er Bewegungen des Toilettendeckels 5 gegenüber dem Klosettkörper 1 dämpft. Darauf wird weiter unten noch näher eingegangen. Beide Dämpfer haben die Funktion, eine ungedämpfte und daher zu schnelle Abwärtsbewegung des Toilettendeckels 5 oder der Toilettenbrille 4 in einem bestimmten Winkelbereich vor Erreichen der horizontalen Lage, das heißt der Anlage an dem Klosettkörper 1, zu bewirken. Insoweit entsprechen sie dem Inhalt des bereits mehrfach zitierten Standes der Technik EP 1 331 417 B1. Bei diesem Ausführungsbeispiel kann aber zusätzlich auch eine ungedämpfte und damit zu schnelle Bewegung von Toilettenbrille 4 und Toilettendeckel 5 vor dem Erreichen der maximal aufgeklappten Position erreicht werden, worauf im Folgenden näher eingegangen wird. Dies verhindert ein heftiges und mit Störgeräuschen verbundenes Anschlagen, insbesondere des Toilettendeckels 5 an der Spülkastenverkteidung 3. In Extremfällen könnten hierbei auch Schäden auftreten. Dasselbe würde für eine Toilette mit Unterputzspülkasten gelten; dann befände die Frontverkleidung (vor dem Montagegestell der Toilette bzw. vor dem Unterputzspülkasten) an der Stelle der Spülkastenverkleidung 3.

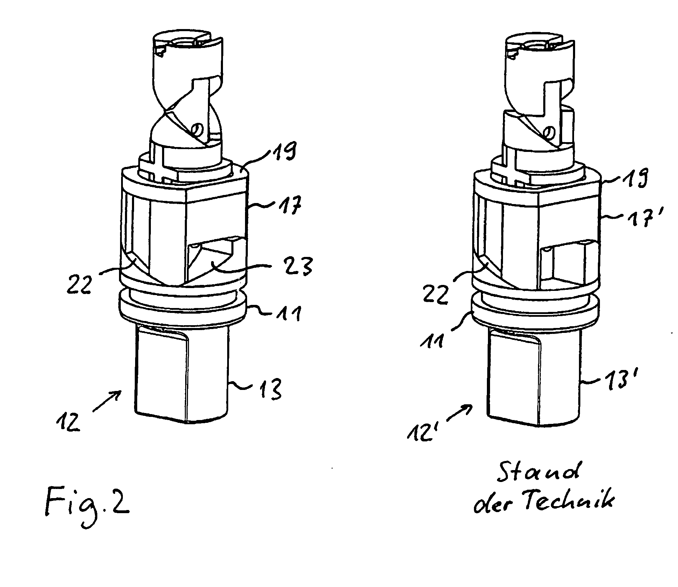

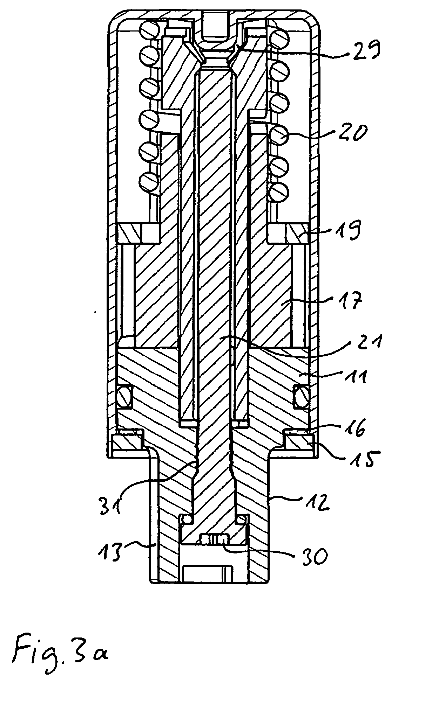

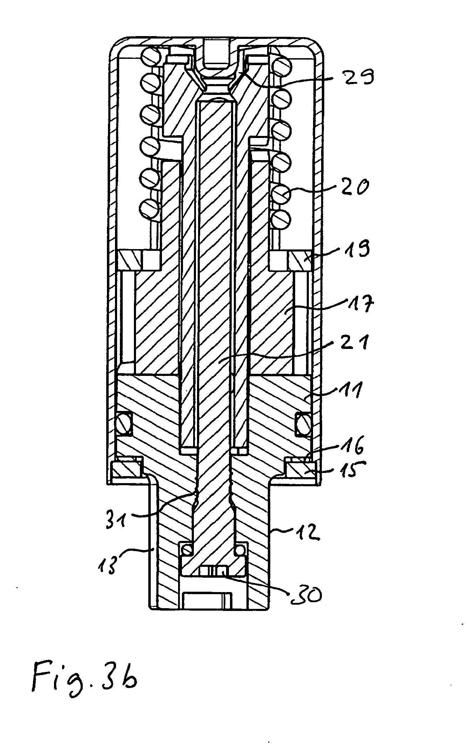

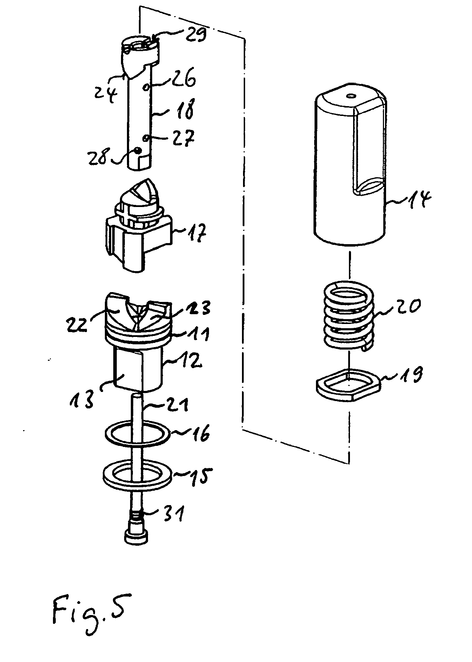

Die Ausführungsform des Dämpfers nach diesem Ausführungsbeispiel zeigt Figur 2 in der linken Darstellung; in der rechten Darstellung der Figur 2 ist zum Vergleich eine analoge Ausführungsform nach dem Stand der Technik gemäß der EP 1 331 417 B1 dargestellt. Der Übersichtlichkeit halber sind hierbei die in beiden Fällen identischen Gehäuse weggelassen, die den in Figur 2 oberen Teil der beiden Dämpfer bis zu einem Bund 11 abdecken. Zur Veranschaulichung kann neben den folgenden Figuren 3 bis 5 beispielsweise auch auf die Figuren 5 und 8 der EP 1 331 417 81 verwiesen werden, und zwar dort auf das Bezugszeichen 2. Die beiden Bunde 11 sind hierbei mit dem gleichen Bezugszeichen bezeichnet: generell werden sich entsprechende Elemente der beiden Dämpfer mit gleichen bzw. entsprechenden Bezugszeichen versehen, um den Vergleich zu erleichtern.

Der Bund 11 Ist integrierter Bestandteil eines ersten Dämpferelements bzw. Rotors 12 bzw., beim konventionellen Dämpfer, 12'. Dieser weist in Figur 2 unterhalb des Bundes 11 einen im Durchmesser verringerten und abgesehen von zwei diametralen Abflachungen ansonsten zylindrischen Abschnitt 13 bzw. 13' auf. Dieser Abschnitt 13 dient mit seinen Abflachungen zur Drehverriegelung in den Montageeinrichtungen zur Befestigung auf dem Klosettkörper 1, vergleiche Figur 1. Das in den folgenden Figuren noch näher erläuterte Gehäuse weist entsprechende Abflachungen auf (vergleiche Figur 5), die zur entsprechenden drehverriegelten Montage in einem Montagesteg des Toilettendeckels 5 oder der Toilettenbrille 4 dienen. Der abflachungsfreie zylindrische Abschnitt des Gehäuses liegt dazwischen und bildet keine Drehverriegelung. Dementsprechend ragt der Abschnitt 13 jeweils formschlüssig in die innenliegenden Montageeinrichtungen zur Befestigung auf dem Klosettkörper 1 hinein. An einer Seite, zum Beispiel von vorne gesehen links, ist der Montagesteg des Toilettendeckels 5 mit einer an die Abflachungen des Gehäuses 14 angepassten und damit einen Formschluss herstellenden Durchgangsöffnung ausgestattet und der Montagesteg des Toilettendeckels 5 mit einem im Schnitt kreisrunden Sackloch, das dementsprechend keinen Formschluss herstellt. Auf der anderen Seite ist es genau umgekehrt Daraus folgen jeweils selektive (hinsichtlich der Dämpfung) kraftschlüssige Verbindungen zwischen Toilettenbrille 4 und Klosettkörper 1 bzw. zwischen Toilettendeckel 5 und Klosettkörper 1, wobei die im Schnitt runden Öffnungen lediglich zur Zentrierung und Lagerung dienen.

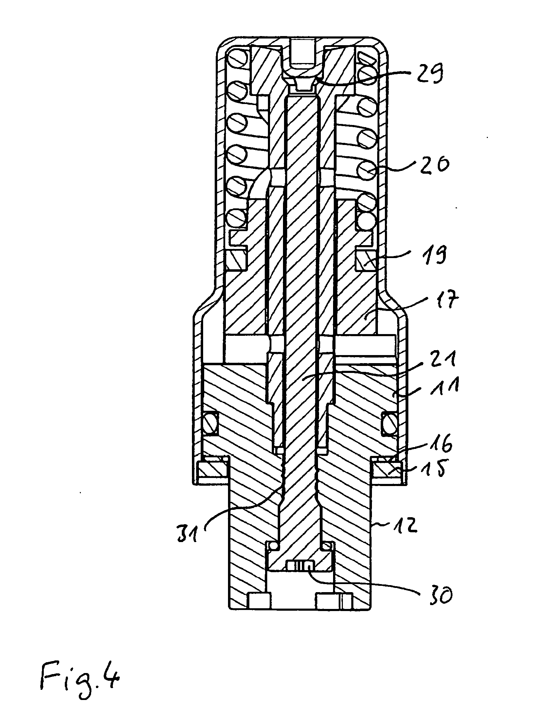

Die Figuren 3a, 3b und 4 zeigen Schnittdarstellungen des linken Dämpfers aus Figur 2 mit zusätzlichem Gehäuse 14. die jeweils die Längsachse In der Zeichenebene enthalten. Im Vergleich zu der dreidimensionalen Darstellung des Gehäuses 14 in Figur 5 ergibt sich, dass sich die Schnittdarstellungen in den Figuren 3 (a und b) und 4 auf dieses Gehäuse 14 bezogen zueinander rechtwinklig verhalten. Ferner unterscheiden sich die Figuren 3a und 3b durch die Position eines weiter unten noch näher erläuterten Elements 21 voneinander. Auf den damit verbundenen Einstellmechanismus wird noch näher eingegangen.

Man erkennt im Vergleich der Figuren 2 bis 5 den Rotor 12 mit dem B und 11, wobei durch eine O-Ring-Dichtung in einer Nut des Bundes 11 eine Abdichtung gegenüber dem Gehäuse 14 gegeben ist und der Rotor 12 durch einen Sicherungsring 15 mit einem Gleitring 16 axial fest, aber drehbar in dem Gehäuse 14 gehalten ist. Weiterhin erkennt man einen Kolben 17, ein Rotorverlängerungsteil 18, einen Ventilkörper 19 in Ringform mit geraden Abschnitten und eine Schraubenfeder 20. Schließlich gibt es noch ein zentrales Achsenteil 21, das nur In den Figuren 3 und 4 als separates Teil erkennbar ist. Die Gesamtkonstruktion ähnelt, wie bereits erläutert, mit Ausnahme der Gestaltung der Nockenflächen dem bereits zitierten Stand der Technik EP 1 331 417 B1.

Dementsprechend kann man vor allem in den Figuren 2 (linke Darstellung) und 5 deutlich erkennen, dass der Rotor 12 als im Sinn der Ansprüche erstes Dämpferelement eine erste Nockenfläche 22 und eine sich daran, über einen kurzen steigungsfreien Zwischenabschnitt, anschließende zweite Nockenfläche 23 aufweist. Ferner erkennt man, dass das mit dem Rotor 12 drehfest verbundene Rotorverlängerungsteil 18 komplementäre und nach unten weisende Nockenflächen 24 und 25, nämlich eine dritte und eine vierte aufweist. Im -Vergleich der Figuren 3 und 4 und anhang Figur 5 erkennt man, dass dieses Rotorverlängerungstell 18 mit zwei diametral entgegengesetzten Abflachungen formschlüssig in den Rotor 12 eingesteckt ist und darin drehfest gehalten ist.

Man erkennt ferner, dass der Kolben 17 zu den ersten und zweiten Nockenflächen 22 und 23 (in den Figuren unten) und zu den dritten und vierten Nockenflächen 24 und 25 (in den Figuren oben) passende Gegenflächen aufweist, und zwar nach unten eine in der Länge fast der gesamten Erstreckung der ersten Nockenfläche 22 entsprechende Nockenfläche, allerdings nur ein kurzes angeschrägtes Stück passend zu der zweiten Nockenfläche 23, und nach oben wiederum eine praktisch der gesamten Erstreckung der dritten Nockenfläche 24 entsprechende Gegenfläche und eine ebenfalls fast der gesamten Erstreckung der vierten Nockenfläche 25 entsprechende Gegenfläche. Dabei bilden die Gegenflächen des Kolbens 17 jeweils Vorsprünge nach oben und nach unten. Hier könnten allerdings auch jeweils nur einfache schmalere und vorzugsweise etwas abgerundete oder angeschrägte Vorsprünge mit geringerer Erstreckung im Sinn der Schraubenlinienform Verwendung finden.

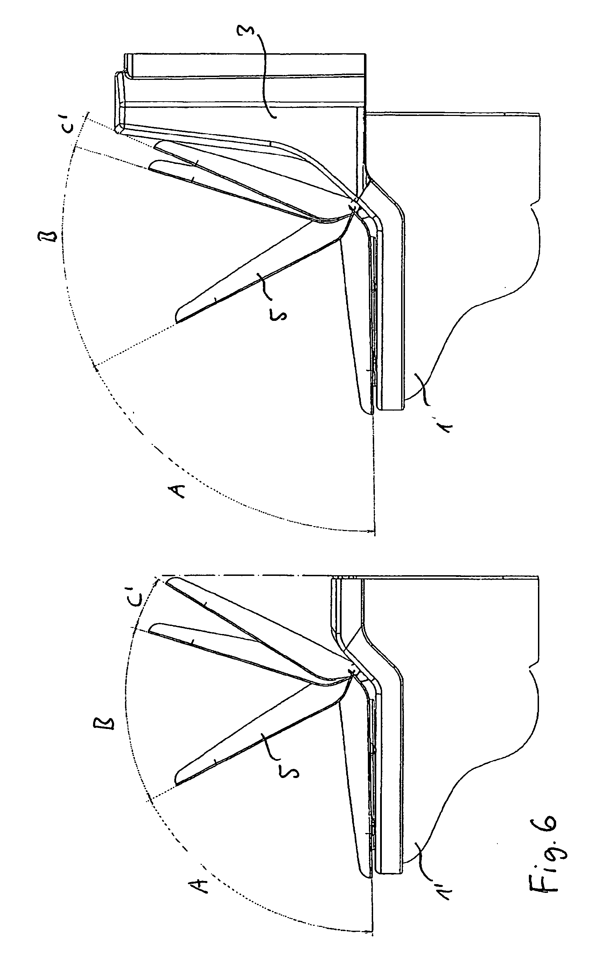

Ferner erkennt man, dass die Nockenflächen wegen der hier (vergleiche folgende Erläuterungen zu Figur 6) angestrebten Drehwinkel jeweils doppelt vorgesehen sein können. Zum Beispiel ist die erste Nockenfläche 22 in Figur 5 zu sehen und mit dem Bezugszeichen 22 bezeichnet, es schließt sich jedoch von oben gesehen gegen den Uhrzeigersinn an die zweite Nockenfläche 23 und die Stufe an deren Ende noch eine erste Nockenfläche 22 an. Dasselbe gilt für die zweite Nockenfläche 23, die von oben gesehen im Uhrzeigersinn an die erste Nockenfläche 22 und einen kleinen flachen Zwischenabschnitt anschließt. Entsprechendes gilt für alle anderen Nockenflächen und Gegenflächen auch.

Ferner erkennt man, dass eine relative Drehung zwischen dem Gehäuse 14 und dem Rotor 12 (durch jeweiligen formschlüssigen Eingriff der abgeflachten Abschnitte) möglich ist und das Gehäuse 14 dabei den Kolben 17 drehfest hält Hierzu weist der Kolben 17 ebenfalls abgeflachte Abschnitte auf; in Figur 5 erkennt man einen der zwei nach vorne rechts weisend und der andere weist in Figur 5 nach hinten links. In Figur 4 kann man den Formschluss zwischen dem Kolben 17 und dem Gehäuse 14 sehen.

Es kommt also zu einer Relativdrehung zwischen Rotor 12 und Kolben 17 und infolge der wechselseitigen Anlagen zwischen den erwähnten Nockenflächen und kolbenseltigen Gegenflächen zu einer axialen Verschiebung (in den Figuren vertikal) des Kolbens 17 relativ zum Rotor 12 und zum Gehäuse 14. (Die Figuren 3a, b und 4 zeigen dabei den Kolben 17 in der Position aus Figur 2.) Dabei bleibt die axiale Position zwischen dem Rotorverlängerungsteil 18 und dem Rotor 12 natürlich erhalten. Allerdings nimmt der Kolben 17 den Ventilkörper 19 mit und komprimiert bzw. dekomprimiert die Schraubenfeder 20, die einerseits an einer stirnseitigen Abschlussfläche des Gehäuses 14 anliegt und andererseits an dem Kolben 17. Mit dieser Feder kann man in einem gewissen Umfang zum Beispiel das in eine Drehrichtung wirkende Eigengewicht eines Bauteils, das der Dämpfer in seiner Bewegung dämpfen soll, kompensieren, zum Beispiel das Eigengewicht einer Toilettenbrille oder eines Toilettendeckels.

Die Schraubenfeder 20 ist übrigens an einem insbesondere in den Figuren 4 und 5 erkennbaren Steg des Kolbens 17 abgestützt, wobei dieser Steg entlang seines Umfangs, und zwar um 90° zu den Kolbenabflachungen verdreht, seinerseits zwei Abflachungen aufweist, vergleiche die Figuren 3a und b. Diese dienen dazu, den ringartigen Ventilkörper 19 mit angepasster Form aufstecken und dann durch Verdrehen sichern zu können. Er ist also zwischen dem erwähnten Steg und einem breiten Abschnitt des Kolbens 17, der das Gehäuse 14 im Bereich von dessen Abflachungen im Wesentlichen formschlüssig ausfüllt, gehalten. Der Ventilkörper 19 hat dabei ein axiales Spiel in diesem Zwischenraum. Man erkennt ferner, dass der Kolben 17 an seinen In Figur 5 nach links vorne und nach rechts hinten weisenden Außenflächen des breiten Bereichs axial laufende Nuten aufweist, vergleiche auch Figur 3. Durch diese kann ein viskoses Dämpfungsmittel, hier ein Fett, mit dem das gesamte Gehäuse 14 gefüllt ist, strömen. Wenn sich der Kolben 17 bezüglich der Figuren aufwärts bewegt, also von dem Rotor 12 weg, dann legt sich allerdings der Ventilkörper 19 an die in diesem Sinn obere Stirnfläche des verdickten Bereichs des Kolbens 17 an, sodass das Hindurchströmen des Dämpfungsfetts weitgehend unterbunden wird. Bei der umgekehrten Bewegungsrichtung entsteht hier durch das erwähnte axiale . Spiel des Ventilkörpers 19 in seiner Rille ein Schlitz, durch den das Fett vergleichsweise widerstandsfrei hindurch strömen kann. Damit ist ein Einwegeventil gebildet. Es kann ergänzend verwiesen werden auf die bereits mehrfach zitierte EP 1 331 417 B1.

Grundsätzlich könnte man dieses Einwegeventil so auslegen, dass bei einer Bewegung in dessen Sperrrichtung eine geeignete Dämpfung entsteht. Im vorliegenden Fall jedoch soll das Einwegeventil (17 und 19) in der Spermichtung tatsächlich im Wesentlichen die Fettströmung unterbinden. Stattdessen gibt es einen weiteren gedämpften Strömungsweg, also einen Strömungsweg mit deutlich höherem Strömungswiderstand als der des Einwegeventils 17, 19 in dessen Durchlassrichtung, also bei Abwärtsbewegungen des Kolbens 17. Dazu weist das Rotorverlängerungsteil 18 eine in den Figuren 3a, b und 4 erkennbare zentrale Bohrung auf. In dieser Bohrung steckt zunächst das in Figur 5 ebenfalls erkennbare zentrale Achsenteil 21, ein Stahlstift. Wie aus den Figuren 3a und b ersichtlich, gibt es jedoch zwischen der Innenmantelfläche dieser zentrischen Bohrung in dem Teil 18 und dem Achsenteil 21 einen Zwischenraum. Dieser Zwischenraum ist angeschlossen an radiale Bohrungen, die jeweils durch Ihn hindurch gehen und das Rotorverlängerungstell 18 ganz durchsetzen: Diese drei Bohrungen sind in Figur 5 erkennbar und mit den Bezugszeichen 26, 27 und 28 beziffert. Die Bohrungen 26 und 27 erkennt man auch in Figur 4. Ferner mündet der Zwischenraum oben in axialer Richtung in ein stirnseitiges Ende des Rotorverlängerungsteils und ist dort an einen ebenfalls radial verlaufenden Schlitz 29 angeschlossen, der sich im Vergleich zu Figur 4 aus den Figuren 3a und b ergibt. Man erkennt ferner einen zentrischen Innenvorsprung des Gehäuses 14 dort, der in der Schnittebene der Figur 4 (und dazu schräg verlaufenden) das Rotorverlängerungsteil 18 zentriert, jedoch in der Schnittebene der Figuren 3a und b infolge des erwähnten Schlitzes 29 einen Strömungsweg zu einem Raum innerhalb des Gehäuses 14 und radial außerhalb des Rotorverlängerungsteils 18 und des Teils des Kolbens 17 über dem Ventilkörper 19 freilässt.

Schließlich zeigen die Figuren 3a und b, dass das zentrale Achsenteil 21 im Übergang zu diesem Schlitz 29 nur einen sehr kleinen Strömungsquerschnitt freilässt, der in Figur 3a zeichnerisch nicht mehr zu erkennen und in Figur 3b etwas größer ist. Durch diesen Zwischenraum kann der Dämpfungsgrad, also der Strömungswiderstand des Fetts, eingestellt werden. Dazu weist das entgegengesetzte Ende des zentralen Achsenteils 21 einen Werkzeugeingriff 30 auf und kann das zentrale Achsenteil 21 im Übrigen einen Gewindeeingriff 31 mit einem Teil der Innenmantelfläche der zentralen Bohrung in dem Rotorverlängerungsteil 18 haben. Den Werkzeugeingriff 30 an dem entgegengesetzten Ende des Achsenteils 21 lässt man dann bei der Produktion zunächst zugänglich; das untere Ende des Rotors 12 mit den abgeflachten Abschnitten 13 ist also mit einem von der unteren Stirnseite her offenen Loch bis zu dem Achsenteil 21 versehen, das die Figuren 3a, b und 4 auch zeigen. Man kann dann durch Drehen eine individuelle Einstellung der Dämpfung erzielen. In diesem Sinn ist die Dämpfung in Figur 3a stärker als in Figur 3b. Nach der Einstellung kann je nach Bedarf dieses Loch dauerhaft oder reversibel verschlossen werden, um eine. Nachjustage zu erlauben oder auszuschließen. Es kann zum Beispiel vergossen werden.

Eine Dämpfungswirkung tritt also dadurch auf, dass bei gesperrtem Ein-Weg-Ventil 19, 17 und einer Aufwärtsbewegung des Kolbens 17 in diesem Außenraum Dämpfungsfett verdrängt und durch den Schlitz 29 und die Verengung an der dortigen Stirnseite des Achsenteils 21 hindurch In den axialen Zwischenraum zwischen dem Achsenteil 21 und der zentralen Bohrung in dem Rotorverlängerungsteil 18 gepresst wird. Dieses Fett kann dann durch eine der Bohrungen 27 und 28 auf der anderen Seite des Kolbens 17 wieder austreten und das sich dort vergrößernde Volumen befüllen. In umgekehrter Strömungsrichtung funktioniert dieser Kanal grundsätzlich auch, wobei dann jedoch der niedrigere Strömungswiderstand durch das sich öffnende Einwegeventil 17, 19 dominiert.

Eine solche Aufwärtsbewegung des Kolbens 17 kann, gedanklich von seiner tiefsten Position ausgehend, bei dieser Erfindung In drei verschiedenen Drehrichtungen erfolgen, und zwar eine erste entlang der ersten Nockenfläche 22 und der dritten Nockenfläche 24, bei der sich der Kolben. 17 von oben gesehen im Uhrzeigersinn dreht, und eine zweite umgekehrt entlang der zweiten Nockenfläche 23 und der vierten Nockenfläche 25. Bei der erstgenannten Drehung ist zunächst die Bohrung 28 durch den am weitesten nach unten reichenden Teil (in Figur 5 nach vom weisend) des verdickten Abschnitts des Kolbens 17 verdeckt und stattdessen die Öffnung 27 geöffnet. Mit fortschreitender Bewegung wird allerdings auch die Öffnung 28 geöffnet. Bei der zweiten Bewegung gilt zunächst das Gleiche und verdeckt dann der Kolben die Öffnung 27, jedoch erst nachdem er die Öffnung 28 freigegeben hat, sodass hier immer ein Strömungsweg existiert.

Mit der oberen Bohrung 26 kann die Dämpfungswirkung des Strömungsweges über den Schlitz 29 im Übrigen für einen Anfangsabschnitt der Aufwärtsbewegung kurzgeschlossen werden. Es verbleibt aber die Dämpfungswirkung des schmalen Zwischenraums um das zentrale Achsenteil 21 herum. Wenn sich der Kolben in seiner axialen Bewegung entlang den Nockenflächen 22 und 23 aufwärts bewegt, überdeckt er diese Öffnung 26 ab einer gewissen Winkelposition und erhöht damit die Dämpfungswirkung deutlich. Diese Erhöhung findet infolge der Ausdehnung der Öffnung 26 nicht abrupt statt. Sie erlaubt, wie zuvor bereits erläutert, eine Beeinflussung des Dämpfungsverhaltens unabhängig von einer Veränderung der Steigung der Nockenflächen 22 und 23. Diese können übrigens bei diesem Ausführungsbeispiel eine Steigung von etwa 22 mm bzw. 26 mm, jeweils bezogen auf den Vollwinkel von 360°, haben. Das gilt bei diesem Ausführungsbeispiel für einen Außendurchmesser der den Nockenflächen zugrunde liegenden Querschnlttskreisform von 18 mm.

Figur 6 veranschaulicht Winkelabschnitte der Bewegungen der Toilettenbrille 4 und des Toilettendeckels 5 aus Figur 1. Die rechte Darstellung zeigt dabei eine Toilette mit Aufputzspülkasten 3, die linkeDarstellung zeigt zum Vergleich eine weitgehend entsprechende Toilette (wobei der Klosettkörper hier zur Unterscheidung mit 1' bezeichnet ist) mit identischer Toilettenbrille 4, identischem Toilettendeckel 5 sowie identischer gedämpfter Lagerung derselben an dem Klosettkörper 1', wobei jedoch ein in der Figur nicht erkennbarer Unterputzspülkasten Verwendung findet.

In Figur 6 rechts erkennt man drei Winkelabschnitte A, B und C, wobei diese Winkelabschnitte und die Dämpfungseigenschaften innerhalb derselben bei diesem Ausführungsbeispiel für die Toilettenbrille 4 und den Toilettendeckel 5 identisch sind. Dementsprechend zeigt Figur 6 auch nur den Toilettendeckel 5 in den verschiedenen Positionen.

Im Winkelabschnitt A, in der Beschreibungseinleitung als Endbewegungsabschnitt bezeichnet, der, in einer ersten Bewegungsrichtung dämpft, ist die Abwärtsbewegung gedämpft und die Aufwärtsbewegung ungedämpft. Es geht hier nämlich darum, den fallenden Toilettendeckel 5 (gleichermaßen die fallende Toilettenbrille 4) nicht völlig ungebremst aufschlagen zu lassen bzw. dem Benutzer bei einer Abwärtsbewegung ein gewisses Komfortgefühl zu geben. Dieser Winkelbereich ist bei diesem Ausführungsbeispiel etwa 60° bis 65° groß. Die volle Dämpfungswirkung durch Verdeckung der Öffnung 26 tritt etwa in den letzten 30° auf.

In dem Winkelabschnitt B erfolgt in keiner der beiden Bewegungsrichtungen eine Dämpfung, um eine möglichst leichtgängige Bewegung durch die manuelle Nutzerbedienung zu ermöglichen. Dieser Winkelbereich kann etwa 30° bis 45° groß sein.

Im Winkelabschnitt C erfolgt eine Dämpfung in der zweiten Bewegungsrichtung nämlich der Aufwärtsbewegungsrichtung; es handelt sich also auch hier um einen Endbewegungsabschnitt im Sinn der Beschreibungseinleitung. Hier ist die Schließbewegungsrichtung, also die im Winkelabschnitt A gedämpfte, ungedämpft. Damit können Toilettendeckel 5 bzw. Toilettenbrille 4 leicht und ungehindert von der Spülkastenverkleidung 3 abgehoben werden, schlagen aber nicht ungebremst an diese an, sodass lästige Geräusche oder gar Oberflächenbeschädigungen vermieden werden können.

Ersichtlich gibt es die Bewegungsabschnitte bzw. Winkelbereiche A und B im linken Beispiel der Figur 6 identisch und aufgrund der Verwendung derselben Dämpfer mit identischen Dämpfungseigenschaften. Allerdings ist hier der Winkelabschnitt C' rößer als der Winkelabschnitt C im linken Beispiel. Dies liegt einfach daran, dass der Toilettendeckel 5 und die Toilettenbrille 4 weiter aufgeklappt werden können, weil wandseitig mehr Platz zur Verfügung steht. Der Winkelbereich C' kann zum Beispiel 10° bis 20° betragen. Auch hier kann infolge der Öffnung 26 ein erster Teil schwächer gedämpft sein als ein zweiter wandseitiger Teil. Mit Rücksicht auf die Spülkastenverkleidung 3 in Figur 6 links könnte man dann den schwächer gedämpften Teil des Abschnitts C schon früher beginnen lassen als gezeichnet, beispielsweise bei etwa 10° gegenüber der vertikalen Lage.

In Figur 6 links wurde ein Teil der verfügbaren Beweglichkeit des Dämpfers nicht ausgenutzt, ohne die grundsätzlichen Dämpfungseigenschaften dadurch zu ändern. Abhängig von der Größe des Klosettkörpers 1' Im rechten Beispiel kann übrigens dort ebenfalls ein Teil eines verfügbaren Endbewegungsabschnitts auf der Wandseite nicht ausgenützt sein, sodass unterschiedliche Abstände der Drehachse von der Wand bzw. auch unterschiedliche Geometrien des Toilettendeckels 5 oder der Toilettenbrille 4 berücksichtigt werden können, ohne eine andere Dämpferauslegung zu wählen.

Da die Summe der Winkelbereiche A, B und C' in der rechten Darstellung jedenfalls deutlich unter 180° liegt, ist es leicht möglich, die anhand der Figuren 2 bis 5 erläuterten Nockenflächen und Gegenflächen jeweils doppelt auszubilden.

## Patentansprüche

1. Dämpfer mit
einem ersten Dämpferelement (12), das eine sich um eine Achse der Drehbewegung windende und dabei helixartig steigende erste Nockenfläche (22) aufweist, und
einem zweiten Dämpferelement (17), das relativ zu dem ersten Dämpferelement (12) um die Achse drehbar ist und dazu ausgelegt ist, während der Drehbewegung auf und entlang der ersten Nockenfläche (22) verschoben zu werden, wobei dadurch eine der helixartigen Steigung entsprechende relative axiale Verschiebung zwischen den beiden Dämpferelementen (12, 17) zu erzeugen ist, die ihrerseits durch ein viskoses Dämpfungsmedium gedämpft ist und so mittelbar zu einer Dämpfung der Drehbewegung führt.
wobei die erste Nockenfläche (22) in eine zweite, sich auch um die Achse der Drehbewegung windende und dabei helixartig steigende Nockenfläche (23) übergeht, welche zweite Nockenfläche (23) jedoch eine Steigung mit entgegengesetztem Sinn zu der Steigung der ersten Nockenfläche (22) aufweist, **dadurch gekennzeichnet, dass** der Dämpfer für eine Drehbewegung von Toilettendeckeln (5) oder -brillen (4) ausgelegt und
hinsichtlich der Dämpfung der axialen Verschiebung zwischen den beiden Dämpferelementen (12, 17) unidirektional ist,
so dass bei einer Verschiebebewegung des zweiten Dämpferelements (17) mit einem bestimmten Drehsinn auf und entlang einer der beiden Nockenflächen (22, 23) die dadurch erzeugte axiale Verschiebung der beiden Dämpferelemente (12, 17) gedämpft ist und bei einer Verschiebebewegung des zweiten Dämpferelements (17) mit diesem Drehsinn auf und entlang der anderen der beiden Nockenflächen (22, 23) eine ungedämpfte axiale Verschiebung der beiden Dämpferelemente (12, 17) erzeugt wird und beim umgekehrten Drehsinn umgekehrt,
so dass also bei dem bestimmten Drehsinn die eine der beiden Nockenflächen (22, 23) eine Bedeutung für die Dämpfung hat und die andere der beiden Nockenflächen (22, 23) beim umgekehrten Drehsinn.

2. Dämpfer nach Anspruch 1, bei dem zu den beiden Nockenflächen (22, 23) komplementäre Nockenflächen, eine dritte (24) und eine vierte (25), vorgesehen sind und durch ein Verschieben des zweiten Dämpferelements (17) entlang dieser dritten (24) bzw. vierten (25) Nockenfläche ein Abheben des zweiten Dämpferelements (17) von der ersten (22) bzw. zweiten (23) Nockenfläche begrenzt oder verhindert wird.

3. Dämpfer nach einem der vorstehenden Ansprüche, bei dem zwischen der ersten Nockenfläche (22) und der zweiten Nockenfläche (23) des ersten Dämpferelements (12) ein steigungsfreier Zwischenabschnitt vorgesehen ist.

4. Dämpfer nach einem der vorstehenden Ansprüche, bei dem ein Vorsprung des zweiten Dämpferelements (17) auf der ersten (22) und der zweiten (23) Nockenfläche verschiebbar ist, welcher Vorsprung nach zwei entgegengesetzten Seiten im Sinn der Drehbewegung zur Anpassung an die Nockenflächen (22, 23) angeschrägt ist.

5. Dämpfer nach einem der vorstehenden Ansprüche mit einem Gehäuse (14), in dem das erste (12) und das zweite (17) Dämpferelement zumindest teilweise verbaut sind, wobei das erste Dämpferelement (12) ein Rotor ist, der relativ zu dem Gehäuse (14) in axialer Richtung nicht verschiebbar, jedoch drehbar ist, und das zweite Dämpferelement ein Kolben (17) ist, der relativ zu dem Gehäuse (14) axial verschiebbar, jedoch nicht drehbar ist, die axiale Verschiebebewegung relativ zu dem Gehäuse (14) und die Drehbewegung relativ zu dem Gehäuse (14) durch das Verschieben des Kolbens (17) auf den Nockenflächen (22, 23) des Rotors (12) gekoppelt werden und die axiale Kolbenbewegung durch das viskose Medium hydrodynamisch gedämpft ist.

6. Dämpfer nach einem der vorstehenden Ansprüche, bei dem in einem der Dämpfung der axialen Verschiebung dienenden Strömungsweg eine Öffnung (26) vorgesehen ist, die ab einer bestimmten axialen Position zwischen den beiden Dämpferelementen (12, 17) in einer Richtung durch eines der Dämpferelemente (12, 17) verdeckt ist und in einer entgegengesetzten Richtung frei, womit ab dieser Position eine Änderung des Dämpfungsgrades der axialen Verschiebung erzielt wird.

7. Dämpfer nach einem der vorstehenden Ansprüche, bei dem ein Einstellele-ment zum Einstellen einer Verengung in einem hydrodynamischen Dämpfungsströmungsweg vorgesehen ist, das vorzugsweise von außen betätigbar ist.

8. Dämpfer nach einem der Ansprüche 1 - 6, bei dem ein Einstellelement zum Einstellen einer Verengung in einem hydrodynamischen Dämpfungsströmungsweg vorgesehen ist, das von außen versiegelt ist.

9. Dämpfer nach einem der vorstehenden Ansprüche, auch in Verbindung mit einem weiteren der vorstehenden Ansprüche, der einen Gesamtwinkelbereich von zwischen 100° und 135° überspannt, wobei in einer ersten Bewegungsrichtung ein in dieser Richtung gedämpfter Bewegungsabschnitt A anschließend an die Endposition der Bewegung zwischen 40° und 80° beträgt und in der entgegengesetzten Drehrichtung ein Bewegungsendabschnitt C' anschließend an die Endposition der Bewegung zwischen 5° und 30° beträgt.

10. Aufbausatz für eine Toilette mit einem Dämpfer nach einem der vorstehenden Ansprüche und zumindest einem Toilettendeckel (5) oder einer Toilettenbrille (4).

11. Aufbausatz nach Anspruch 10, bei dem der Dämpfer dazu ausgelegt ist, den Toilettendeckel (5) und/oder die Toilettenbrille (4) beim Schließen nur in einer an die Schließposition anschließenden Bewegungsphase (A) zu dämpfen und beim Öffnen nur in einer an die ganz geöffnete Position anschließenden Bewegungsendphase (C, C') zu dämpfen.

12. Aufbausatz nach Anspruch 10 oder 11, bei dem ein Toilettendeckel (5) und eine Toilettenbrille (4) vorgesehen ist und ein Dämpfer nach einem der Ansprüche 1 bis 9 für den Toilettendeckel (5) vorgesehen und zu einem Drehgelenk des Toilettendeckels (5) benachbart ist und ein zweiter Dämpfer nach einem der Ansprüche 1 bis 9 für die Toilettenbrille (4) vorgesehen und zu einem zu dem erwähnten Drehgelenk des Toilettendeckels (5) distalen Drehgelenk der Toilettenbrille (4) benachbart ist.

13. Toilette mit einem Klosettkörper (1), einem Dämpfer nach einem der Ansprüche 1 bis 8 und zumindest einem Toilettendeckel (5) oder einer Toilettenbrille (4), und/oder einem Aufbausatz nach einem der Ansprüche 11 bis 12.

14. Verwendung eines Dämpfers nach einem der Ansprüche 1 bis 8 für einen Aufbausatz nach einem der Ansprüche 10 bis 12 oder eine Toilette nach Anspruch 13.

## Claims

1. Damper having
a first damper element (12) which comprises a cam surface (22) extending around an axis of a rotational movement and sloping helically therein, and
a second damper element (17) which is rotatable around said axis relatively to said first damper element (12) and is adapted for a movement on and along said first cam surface (22) during said rotational movement, whereby an axial relative displacement between said two damper elements (12, 17), which corresponds to the helical slope, can be generated, which axial relative displacement is damped by a viscous damping medium and indirectly causes a damping of said rotational movement, thus,
wherein said first cam surface (22) changes into a second cam surface (23) extending also around said axis of said rotational movement and sloping helically therein, which second cam surface (23) however comprises a slope opposite to a slope of said first cam surface (22),
**characterized in that** said damper is adapted for a rotational movement of toilet lids (5) or toilet seats (4) and
said damper is unidirectional with respect to said damping of said axial displacement between said two damper elements (12, 17),
so that, when said second damper element (17) is moved on and along one of said two cam surfaces (22, 23) with a certain direction of rotation, said axial displacement of said two damper elements (12, 17) generated thereby is damped and, when said second damper element (17) is moved on and along the other one of said two cam surfaces (22, 23) in said direction of rotation, an undamped axial displacement of said two damper elements (12, 17) is generated, wherein this applies vice-versa in case of the opposite direction of rotation,
so that said one of said two cam surfaces (22, 23) is relevant for the damping in case of said certain direction of rotation and said other one of said two cam surfaces (22, 23) is relevant for said damping in case of said opposite direction of rotation.

2. The damper according to claim 1, wherein cam surfaces complementary to said two cam surfaces (22, 23) are provided, namely a third (24) and a fourth (25) cam surface, wherein a movement of said second damper element (17) along said third (24) or said fourth (25) cam surface limits or blocks a lifting of said second damper element (17) from said first (22) or said second (23) cam surface.

3. The damper according to one of the preceding claims, wherein an intermediate section having no slope is provided between said first cam surface (22) and said second cam surface (23) of said first damper element (12).

4. The damper according to one of the preceding claims, wherein a protrusion of said second damper element (17) is moveable on said first (22) and said second (23) cam surface, which protrusion is beveled on two opposite sides with regard to said rotational movement for an adaption to said cam surfaces (22, 23).

5. The damper according to one of the preceding claims having a housing (14) in which said first (12) and said second (17) damper element are integrated at least partly, wherein said first damper element (12) is a rotor being not axially displaceable with respect to said housing (14), but being rotatable, and said second damper element is a piston (17) being axially displaceable with respect to said housing (14), but being not rotatable, wherein said axial displacement with respect to said housing (14) and said rotational movement with respect to said housing (14) are coupled by a movement of said piston (17) on said cam surfaces (22, 23) of said rotor (12) and the axial piston movement is damped hydrodynamically by said viscous medium.

6. The damper according to one of the preceding claims, wherein an opening (26) is provided in a flow path provided for said damping of said axial displacement, which opening (26) is, from a certain axial position between said two damper elements (12, 17) on, covered by one of said damper elements (12, 17) in one direction and is free in an opposite direction, so that the damping level changes from said position on during said axial displacement.

7. The damper according to one of the preceding claims, wherein an adjusting element for adjusting a narrowing in a hydrodynamic damping flow path is provided, which can preferably be operated from the outside.

8. The damper according to one of claims 1 to 6, wherein an adjusting element for adjusting a narrowing in a hydrodynamic damping flow path is provided, which is sealed from the outside.

9. The damper according to one of the preceding claims, also in combination with a further one of the preceding claims, which covers a total angular range of between 100° and 135°, wherein, in a first direction of movement, a movement section A damped in said direction subsequent to the end position of said movement amounts to between 40° and 80°, and wherein, in the opposite direction of rotation, a movement end section C' subsequent to the end position of said movement amounts to between 5° and 30°.

10. Mounting kit for a toilet, having a damper according to one of the preceding claims and at least a toilet lid (5) or a toilet seat (4).

11. The mounting kit according to claim 10, wherein said damper is adapted for damping said toilet lid (5) and/or said toilet seat (4) during closing only in a movement stage (A) next to the closing position and during opening only in an end stage (C, C') of the movement next to a completely opened position.

12. The mounting kit according to claim 10 or 11, wherein a toilet lid (5) and a toilet seat (4) are provided and a damper according to one of claims 1 to 9 is provided for said toilet lid (5), namely is provided next to a swivel joint of said toilet lid (5), and a second damper according to one of claims 1 to 9 is provided for said toilet seat (4), namely is provided next to a swivel joint of said toilet seat (4), which swivel joint is distal to said swivel joint of said toilet lid (5).

13. Toilet having a closet body (1), a damper according to one of claims 1 to 8 and at least a toilet lid (5) or a toilet seat (4) and/or a mounting kit according to one of claims 11 to 12.

14. Use of a damper to one of claims 1 to 8 for a mounting kit according to one of claims 10 to 12 or a toilet according to claim 13.

## Revendications

1. Amortisseur comportant:
un premier élément d'amortissement (12) présentant une première surface de came (22) qui s'enroule à la manière d'un mouvement ascendant en forme d'hélice autour d'un axe de mouvement de rotation, et
un deuxième élément d'amortissement (17) rotatif par rapport au premier élément d'amortissement (12) autour dudit axe et mis en place pour pouvoir coulisser sur la première surface de came (22) en la suivant au cours de son mouvement de rotation, ce qui permet un coulissement axial relatif entre les deux éléments d'amortissement (12, 17) en correspondance avec la forme ascendante en hélice, lequel coulissement axial est lui-même amorti par un milieu d'amortissement visqueux, avec pour conséquence,
par ce biais, un amortissement du mouvement de rotation,
la première surface de came (22) se changeant en une deuxième surface de came (23), qui s'enroule également à la manière d'un mouvement ascendant en forme d'hélice autour de l'axe de mouvement de rotation, laquelle deuxième surface de came (23) présentant toutefois une forme ascendante dirigée dans un sens opposé à celui de la forme ascendante de la première surface de came (22),
**caractérisé en ce que** l'amortisseur est conçu pour le mouvement de rotation d'abattants de toilettes (5) ou de lunettes de toilettes (4), et
**en ce qu'**il est unidirectionnel en ce qui concerne l'amortissement du coulissement axial entre les deux éléments d'amortissement (12, 17),
de manière que, lors d'un mouvement de coulissement du deuxième élément d'amortissement (17) selon un sens de rotation donné sur l'une des deux surfaces de came (22, 23) en la suivant, le coulissement axial des deux éléments d'amortissement (12, 17) ainsi produit est amorti et, lors d'un mouvement de coulissement du deuxième élément d'amortissement (17) selon ce sens de rotation sur l'autre des deux surfaces de came (22, 23) en la suivant, il se produit un coulissement axial non amorti des deux éléments d'amortissement (12, 17), et il en va inversement dans le sens de rotation inverse,
de manière que, par conséquent, dans le sens de rotation donné,
l'amortissement est assuré par l'une des deux surfaces de came (22, 23) et,
dans le sens de rotation inverse, par l'autre des deux surfaces de came (22, 23).

2. Amortisseur selon la revendication 1, dans lequel il est prévu une troisième surface de came (24) et une quatrième surface de came (25) complémentaires des deux surfaces de came (22, 23), et un coulissement du deuxième élément d'amortissement (17) le long de cette troisième (24) ou de cette quatrième (25) surface de came permet une limitation ou une inhibition de la levée du deuxième élément d'amortissement (17) par rapport à la première (22) ou à la deuxième (23) surface de came.

3. Amortisseur selon l'une des revendications précédentes, dans lequel il est prévu une section intermédiaire sans forme ascendante entre la première surface de came (22) et la deuxième surface de came (23) du premier élément d'amortissement (12).

4. Amortisseur selon l'une des revendications précédentes, dans lequel une saillie du deuxième élément d'amortissement (17) peut coulisser sur la première (22) et la deuxième (23) surface de came, laquelle saillie est configurée en biseau vers deux côtés opposés dans le sens du mouvement de rotation en étant adaptée aux surfaces de came (22, 23).

5. Amortisseur selon l'une des revendications précédentes, présentant un logement (14) dans lequel le premier élément d'amortissement (12) et le deuxième élément d'amortissement (17) sont installés au moins en partie, le premier élément d'amortissement (12) étant un rotor qui n'est pas coulissant dans la direction axiale par rapport au logement (14) mais qui y est rotatif, et le deuxième élément d'amortissement étant un piston (17) qui est coulissant dans le sens axial par rapport au logement (14) mais qui n'y est pas rotatif, le mouvement de coulissement axial par rapport au logement (14) et le mouvement de rotation par rapport au logement (14) sont couplés sous l'effet du coulissement du piston (17) sur les surfaces de came (22, 23) du rotor (12) et le déplacement axial du piston est amorti de manière hydrodynamique par un milieu visqueux.

6. Amortisseur selon l'une des revendications précédentes, dans lequel il est prévu une ouverture (26) dans une voie d'écoulement servant à l'amortissement du coulissement axial, laquelle ouverture est recouverte, dans une direction partant d'une position axiale donnée entre les deux éléments d'amortissement (12, 17), par l'un des éléments d'amortissement (12, 17) et est libre dans une direction opposée, moyennant quoi on obtient, à partir de cette position, une variation du degré d'amortissement du coulissement axial.

7. Amortisseur selon l'une des revendications précédentes, dans lequel il est prévu un élément de réglage destiné au réglage d'un étranglement dans une voie d'écoulement d'amortissement hydrodynamique, de préférence actionnable depuis l'extérieur.

8. Amortisseur selon l'une des revendications 1 à 6, dans lequel il est prévu un élément de réglage destiné au réglage d'un étranglement dans une voie d'écoulement d'amortissement hydrodynamique, qui est étanché depuis l'extérieur.

9. Amortisseur selon l'une des revendications précédentes, également en conjonction avec une autre des revendications précédentes, lequel couvre un secteur angulaire total compris entre 100° et 135°, en sachant que, dans un premier sens de déplacement, un segment de déplacement A amorti dans cette direction et faisant suite à la position finale du déplacement fait entre 40° et 80° et, dans la direction de rotation opposée, un segment final de déplacement C' faisant suite à la position finale du déplacement fait entre 5° et 30°.

10. Module constitutif pour toilettes, comportant un amortisseur selon l'une des revendications précédentes et au moins un abattant de toilettes (5) ou une lunette de toilettes (4).

11. Module constitutif selon la revendication 10, dans lequel l'amortisseur est conçu pour amortir l'abattant des toilettes (5) et/ou la lunettes de toilettes (4) lors de leur rabattement uniquement dans une phase de déplacement (A) faisant suite à la position de rabattement et lors de leur relèvement uniquement dans une phase finale de déplacement (C, C') faisant suite à la position totalement relevée.

12. Module constitutif selon la revendication 10 ou 11, dans lequel sont prévus un abattant de toilettes (5) et une lunette de toilettes (4), de même qu'un amortisseur selon l'une des revendications 1 à 9 pour l'abattant de toilettes (5) qui est placé contigu à une charnière de l'abattant de toilettes (5) ainsi qu'un deuxième amortisseur selon l'une des revendications 1 à 9 pour la lunette de toilettes (4) qui est placé contigu à une charnière de la lunette de toilettes (4) qui est distale à ladite charnière de l'abattant de toilettes (5).

13. Toilettes comportant un corps de cabinet (1), un amortisseur selon l'une des revendications 1 à 8 et au moins un abattant de toilettes (5) ou une lunette de toilettes (4), et/ou un module constitutif selon l'une des revendications 11 à 12.

14. Utilisation d'un amortisseur selon l'une des revendications 1 à 8 pour un module constitutif selon l'une des revendications 10 à 12 ou des toilettes selon la revendication 13.
